# EUROPEAN PATENT APPLICATION

(11) **EP 4 714 242 A1**
(43) Date of publication of application: **25.03.2026**
(21) Application number: 25201762.9
(22) Date of filing: 12.09.2025
(51) Int. Cl.: A01B 71/04, F16C 33/78

(54) **A HUB-BEARING ASSEMBLY FOR SOIL-WORKING DISCS HAVING A BARRIER SURFACE**

(30) Priority: 23.09.2024 IT 202400021092
(71) Applicant: Aktiebolaget SKF, 415 50 Göteborg (SE)
(72) Inventor: Marivo, Massimo, 10060 Airasca (IT); Urso, Stefano, 40133 Bologna (IT); Gutowski, Jordan Eric, Vernon Hills, 60061 (US); Ruiu, Antonio, 10093 Collegno (IT)
(74) Representative: Kohl, Thomas

(57) **Abstract**

A hub-bearing assembly serves to rotatably mount a soil-working disc (D) on a supporting axle (A) of an agricultural machine. The assembly includes a hub-bearing unit (10) having a rotatable outer race (11) with a flange (12) on an outer axial end (11a) for mounting a disc (D), an enlarged collar section (13) extending from an inner axial end (11b) of the race (11), and a recess (38) defined axially between the flange (12) and collar section (13). A sealing device (20) is mounted with the collar section (13)on an inner side of the hub-bearing unit opposite to the side of the flange (12). The recess (38) serves as a seat for winding agricultural fibers or wires picked up from the fields during use of the agricultural machine and is partially defined by a barrier surface (34) which prevents fibers from sliding out of the recess (38).

## Description

### BACKGROUND OF THE INVENTION

The present invention refers to a hub-bearing assembly for a soil working disc, particularly a tilling disc.

These discs are usually arranged side to side on respective axles projecting from the frame of the plough or another similar agricultural machine. Each disc is rotatably mounted by means of a hub-bearing unit comprised of one or two stationary, radially inner races, fixed on a central axle projecting from an arm of the agricultural machine frame, a radially outer race which is integral with a radial outer flange for mounting the disc, and a dual set of balls or other rolling elements interposed between the inner and outer races. The inner races, and therefore the whole bearing unit, are axially locked against a shoulder of the axle by tightening a ring nut screwed on the free outer end of the axle. See, for example, European Patent Number 1326489.

In order to prevent contaminants (water, mud, soil) from entering the bearing from the side opposite to that where the disc is mounted, i.e. on the side facing the arm of the frame, some bearing units have been equipped with sealing devices having sealing lips slidingly contacting interface shields. However, these sealing devices have not proven to guarantee efficient sealing for a sufficient period of use, particularly if the locking nut is slightly unscrewed or loose.

Efficient sealing action is of primary importance for correct operation of the disc over an acceptable period of time. Since the contamination conditions are extreme, contaminants entering the inner parts of the bearing may rapidly lead to the locking or seizure of a disc, consequently reducing productivity. In some cases, the entry of contaminants is due to the locking nut being partially unscrewed on the free end of the axle.

The performance and life of sealing devices are also limited by metal wires that are used for tying up rolled bales and that are left on the field. These wires are frequently picked up by the discs and tightly wound around the hubs, forming rather thick coils. When the wires become tangled around and adjacent to the sealing device, these wires may destabilize or move part of the sealing device such that the lips of the sealing device are no longer correctly positioned on the respective interface surfaces. Further, vegetable fibers may also become wound about the outer surface of the hub and accumulate on the hub to the extent that the fibers may enter the sealing device and affect the device in a manner similar to the wires.

### SUMMARY OF THE INVENTION

It is a general object of this invention to provide a highly reliable hub-bearing assembly allowing servicing to become less frequent, also under heavy duty conditions. A particular object of the invention is to guarantee sealing action with time against external contaminants, particularly wires or vegetable fibers, by providing the hub-bearing assembly with a seat for accumulation of such wires/fibers. Another object of the invention is to prevent wires or fibers from sliding out the seat and to at least facilitate removal of such wires or fibers from such a seat of the hub-bearing assembly.

These and other objects and advantages, which will be better understood in the following, are achieved according to the invention by a hub-bearing assembly having the features defined in claim 1. Preferred embodiments of the invention are set forth in the dependent claims.

### BRIEF DESCRIPTION OF THE SEVERAL VIEWS OF THE DRAWINGS

A few preferred, but not limiting embodiments of the invention will now be described, reference being made to the appended drawings, in which:
Fig. 1 is an axial cross-sectional view of a first embodiment of a hub-bearing assembly according to the invention, which rotatably supports a soil working disc on an axle projecting from an arm of an agricultural machine;
Fig. 2 is an enlarged view of a detail of Fig. 1;
Fig. 3 is a broken-away, greatly enlarged axial cross-sectional view of a portion of an outer race of a prior art hub-bearing unit, showing the details of a prior art recess;
Fig. 4 is a broken-away, greatly enlarged axial cross-sectional view of a portion of an outer race of a hub-bearing unit of the present invention, showing the details of a recess;
Fig. 5 is another broken-away, greatly enlarged axial cross-sectional view of a portion of the outer race, showing the structural details of the recess and a cutting projection;
Fig. 6 is a side plan view of the hub bearing assembly, shown with a single cutting projection formed as an enclosed ring;
Fig. 7 is a side plan view of the hub bearing assembly, shown with a single cutting projection formed as a plurality of arcuate segments;
Fig. 8 is a side plan view of the hub bearing assembly, shown with a single cutting projection formed as a helix;
Fig. 9 is a broken-away, axial cross-sectional view of an upper portion of the hub assembly, shown with two cutting projections;
Fig. 10 is a broken-away, axial cross-sectional view of an upper portion of the hub assembly, shown with three cutting projections; and
Fig. 11 is a broken-away, axial cross-sectional view of an upper portion of the hub assembly, shown with four cutting projections.

### DETAILED DESCRIPTION OF THE INVENTION

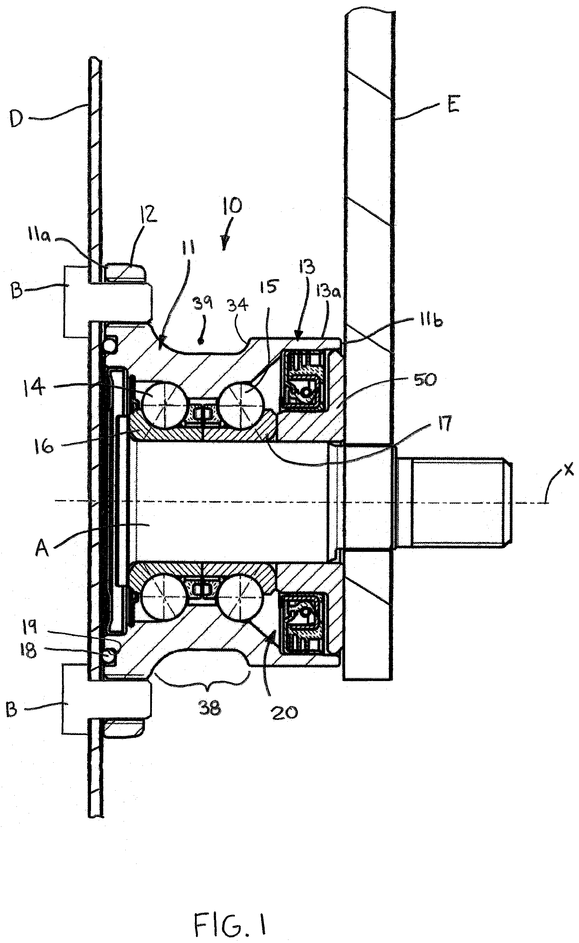

Referring initially to Fig. 1, a hub-bearing assembly for a soil working disc D basically comprises a hub-bearing unit, indicated overall at 10, and a cassette sealing device 20 associated with the hub-bearing unit 10.

The hub-bearing unit 10 comprises an outer race 11 rotatable about a central axis x and having an outer axial end 11a, an inner axial end 11b and a radial flange 12 extending radially outwardly from the outer axial end 11a and configured for mounting the disc D by means of bolts B fitted in a number of axial bores 12a. A radially-enlarged collar section 13 of the outer race 11 extends from the inner axial end 11b and toward the outer axial end 11a, such that a recess 38 is defined between the flange 12 and the collar section 13, as discussed in detail below. A dual set of bearing balls 14, 15 is interposed between the outer race 11 and a pair of inner races 16, 17 tightly mounted side to side on a central axle A projecting from an arm E of the frame of an agricultural machine. On the side of the outer race 11 facing the disc D, an O-ring gasket 18 is accommodated in a circular groove 19 and is pressed between the outer race 11 and the disc D for ensuring sealing action against contaminants accessing the interior of the bearing unit 10.

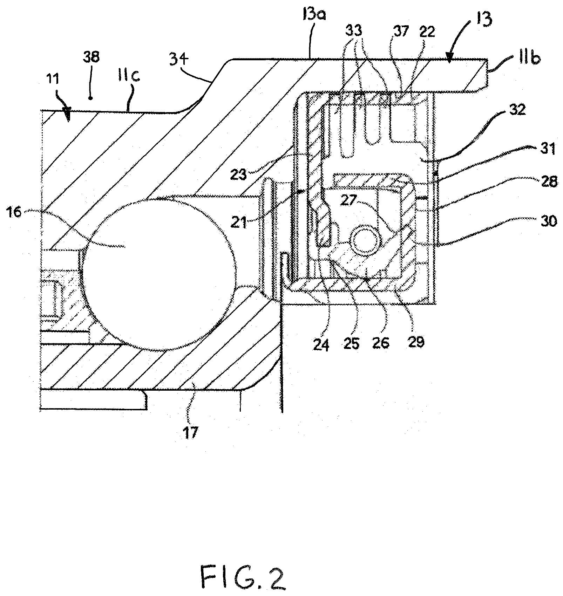

The cassette sealing device 20 is fitted on the side of the bearing unit 10 opposite to that where the disc D is located and preferably consists of a rotatable part and a stationary part. As shown more clearly in Fig. 2, the rotatable part, secured to the outer race 11, comprises a metal sheet ring 21, called a "flinger", having a substantially L-shaped axial cross section, with an outer cylindrical axial wall 22 and a radial wall 23 extending towards the axis of rotation x. Fixed to the zone of the inner peripheral edge 24 of the wall 23 is a gasket 25 of elastic material forming a radial sealing lip 26 and an elongate axial sealing lip 27. It should be noted that in the appended drawings the elastic gaskets are depicted in their non-deformed condition. The stationary part of the sealing device 20 is fixable to the central axle A and includes a metal shield 28 having a substantially C-shaped axial cross section with an inner cylindrical wall 29 engaged by the lip 26, a radial wall 30 against which the end of the elongate lip 27 slides, and a cylindrical wall 31 coaxially outer with respect to the wall 29. On the outer cylindrical wall 31 there is fixed a gasket 32 of elastic material forming a set of parallel radial lips 33 (three in the illustrated example) which slide against the cylindrical wall 22 of the flinger 21. Preferably, a side shield 50 in the form of an annular disc is fixed to the axle A near the sealing device 20, the side shield 50 cooperating with the sealing device 20 to perform an additional labyrinth sealing action and also serving to protect the sealing device 20.

As depicted in Figs. 1 and 2, the sealing device 20 is mounted within the collar section 13 of the outer race 11 of the hub-bearing unit 10. Internally, the collar section 13 has an enlarged side seat (not indicated) in which the flinger 21 is forcefully fitted. On the outside, the collar section 13 has a cylindrical outer surface 13a extending axially from the inner axial end 11b of the outer race 11 and a barrier surface 34 extending axially and radially inwardly from the cylindrical outer surface 13a to a cylindrical outer surface 11c of a central portion of the outer race 11, as discussed below. Although the outer race 11 preferably has an integral collar section 11, the outer race 11 may alternatively include a separate collar (not depicted) providing the collar section 13, which is forcefully fitted within a recess or seat formed in the outer surface 11c of the outer race 11 and extending toward the inner axial end 11b of the race 11.

As mentioned above, the radially outer surface of the hub-bearing unit 10 has a central, radially-inward extending recess 38 located intermediate of, or axially between, the flange 12 at the outer axial end 11a of the outer race 11 and the inner axial end 11b of the race 11 where the sealing device 20 is mounted, more specifically between the flange 12 and the collar section 13. The recess 38 serves as a preferred seat or bed for the accumulation of wires or agricultural fibers picked up during use of the agricultural machine. In other words, by providing the recess 38, the fibers or wires become wound about the outer surface 38a of the recess 38, such that these fibers/wires remain spaced axially from the inner axial end 11b of the outer race 11 and therefore spaced apart from the sealing device 20 to prevent any adverse effect to sealing operation. Specifically, a channel 39, which is open in a radially outer direction, is formed around the outer race 11 of the hub-bearing unit 10 and within which the agricultural fibers and/or metal wires may become wound and accumulate therein.

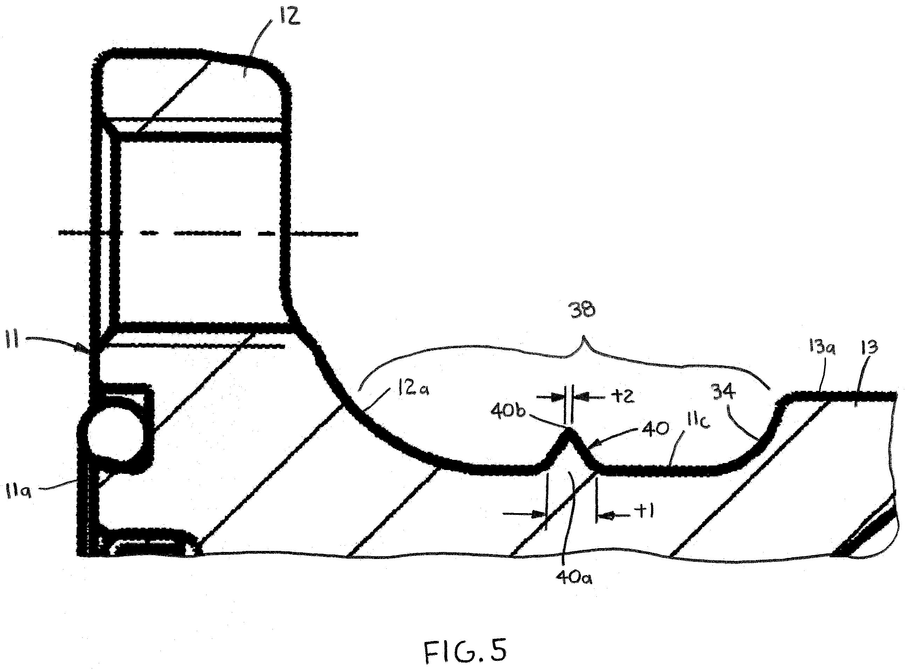

Preferably, the radially-inwardly extending recess 38 is entirely formed on the outer race 11. Specifically, as best shown in Fig. 5, the recess 38 is defined by a radial surface section 12a of the flange 12, an outer circumferential surface section 11c of the outer race 11 and the barrier surface 34 of the collar section 13 of the outer race 11. Alternatively, the recess 38 may be partly defined by a barrier surface 34 provided on a separate collar, as discussed above.

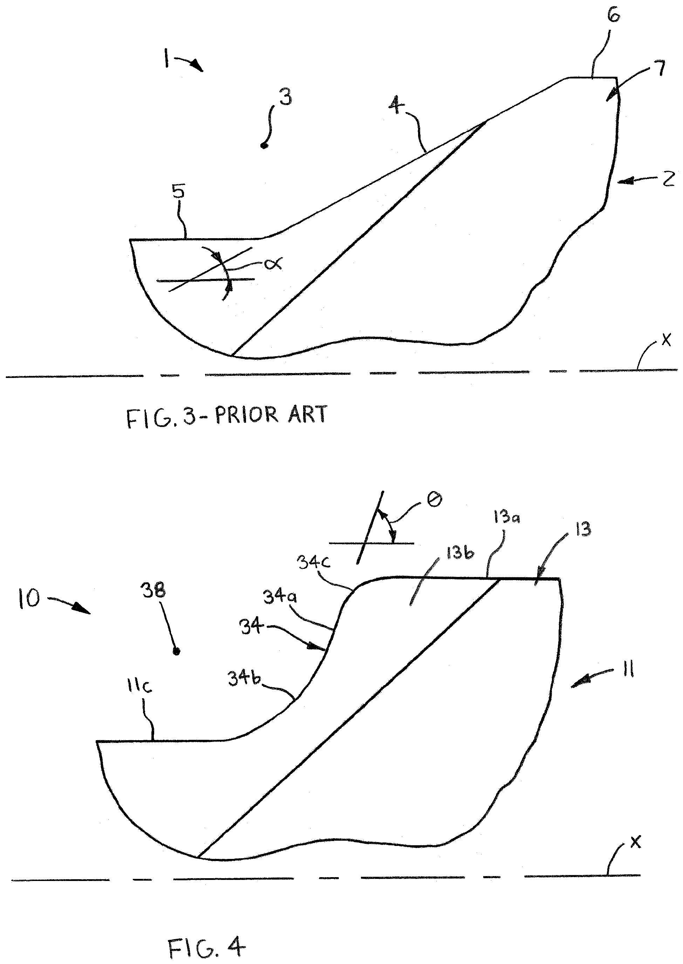

Although providing a recess in an outer race has proven generally effective in preventing wires and vegetable fibers from reaching a sealing device, previously known hub-bearing units have been provided with recesses that are bounded axially inwardly by a relatively shallow surface. Due to centrifugal force and vibration within a rotating outer race, such a shallow surface has allowed migration of fibers or wires from the recess in the direction of a sealing device. More specifically, as shown in Fig. 3, such a prior art bearing unit 1 has an outer race 2 with a recess 3 bounded partially by a conical outer surface 4, which extends between a cylindrical outer surface 5 of the main body of the outer race 2 and a cylindrical outer surface 6 of a collar section 7. A taper angle α is defined between the conical outer surface 4 and a central axis x of the hub-bearing unit 1, the taper angle α having a value of about twenty-five degrees (25°). With such a shallow conical outer surface 4, vegetable fibers or wires may slide along the surface 4 toward the cylindrical outer surface 6 of the collar section 7, and thereafter to the seal device (not shown).

Referring particularly to Fig. 4, in order to at least substantially reduce the possibility of fibers/wires sliding out of the recess 38, the present hub-bearing unit 10 has a recess 38 partially defined or bounded by a relatively steep barrier surface 34, as mentioned above. The barrier surface 34 is formed such that at least a radially-outermost section 34a of the surface 34 defines an angle θ with respect to the central axis x, the angle θ having a value of at least fifty-five degrees (55°) and preferably at least seventy degrees (70°). Such a steep barrier surface 34 has been found to substantially eliminate any tendency of fibers or wires to slide inwardly from the recess 38 toward the seal device 20.

Preferably, the barrier surface 34 includes both the relatively straight, radially outermost section 34a and a curved, radially-innermost section 34b extending between the cylindrical outer surface 11c of the outer race 11 and the outermost section 34 of the barrier surface 34, as well as a curved transition surface 34c extending between the outermost section 34a and the cylindrical surface 13a of the collar section 13. Alternatively, essentially the entire barrier surface 34 may be formed substantially straight and defining the angle θ with respect to the central axis x (structure not shown). In any case, the steep barrier surface 34 has the further benefit of providing an increased amount of material within a portion 13b of the collar section 13 that is located radially outwardly of the axially-inner outer race (not indicated), such additional material increasing the rigidity and strength of the outer race 11.

Further, an accumulation of an excessive amount of fibers or wires within the recess 38, particularly the vegetable fibers, may entirely fill the channel 39 or space provided within the recess 38. As such, any additional wires or fibers may migrate toward the inner axial end 11b of the outer race 11, and thereafter reach the seal device 20. In order to prevent such accumulation of fibers, or at least facilitate the removal thereof, the outer race 11 is preferably provided with at least one cutting projection 40 extending radially outwardly from the recess 38.

More specifically, the at least one cutting projection 40 has a radially-inner base 40a at the outer circumferential surface 11c of the recess 38, the base 40a having a first axial thickness t1, and a radially-outer edge 40b spaced radially outwardly from the base 40a and having a second axial thickness t2, as indicated in Fig. 5. The first axial thickness t1 is greater than the second axial thickness t2 such that the edge 40b of the cutting projection(s) 40 functions either in the manner of a wedge or as a blade. That is, depending on the speed of rotation of the hub assembly and the "sharpness" of the edge 40b, the fibers and/or wires may be sheared merely by contact with the at least one projection 40.

At the least, the one or more projections 40 provide a wedge against which the fibers and wires may be pressed with force, such as by impact(s) of a hammer or a similar tool wielded by an end user, so that the fibers and wires are pressed against the projection edge 40b and become sheared or cut thereby. As a result, the wound fibers or wires may then be pulled out of the recess 38 or be allowed to fall outwardly from the recess 38 by gravity.

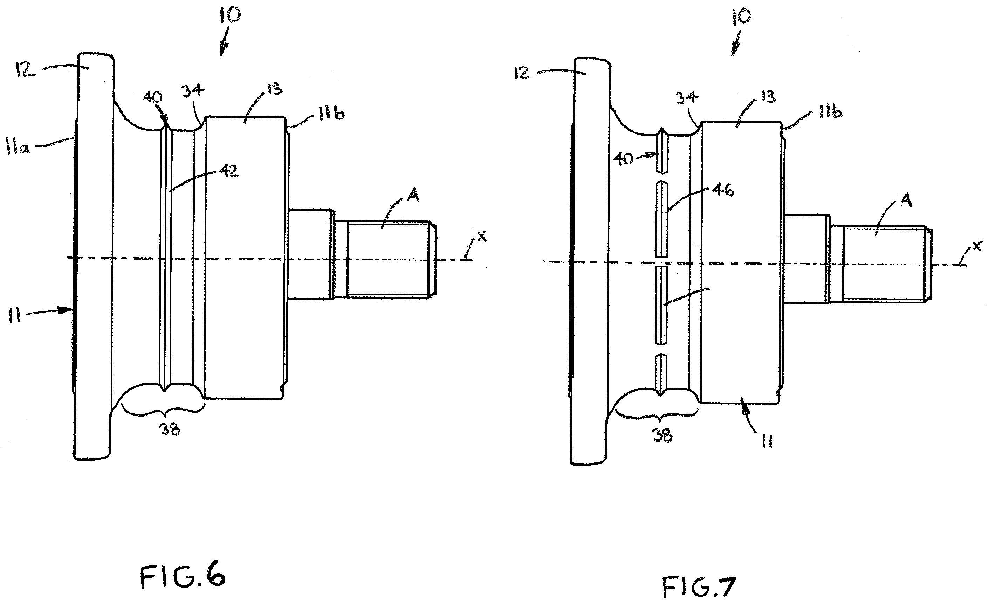

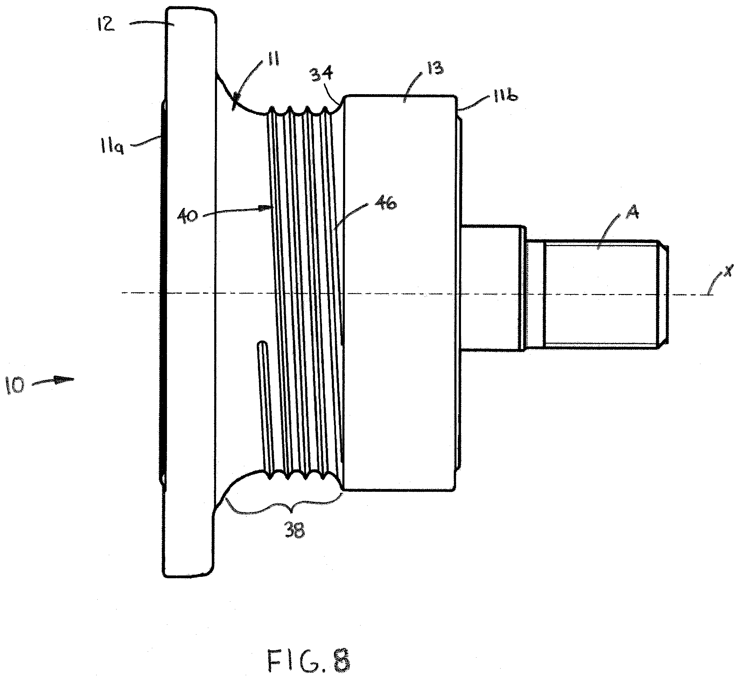

At a minimum, the outer race 11 has at least one cutting projection 40, which is preferably formed as an enclosed ring 42 extending circumferentially and entirely about the central axis x, as best shown in Fig. 6. Alternatively, the single cutting projection 40 may include a plurality of arcuate segments 44 spaced circumferentially apart about the central axis x, as shown in Fig. 7. As a further alternative, the single projection 40 may be formed as a helix 46 extending circumferentially at least one revolution, and preferably a plurality of revolutions, about the central axis x, as depicted in Fig 8.

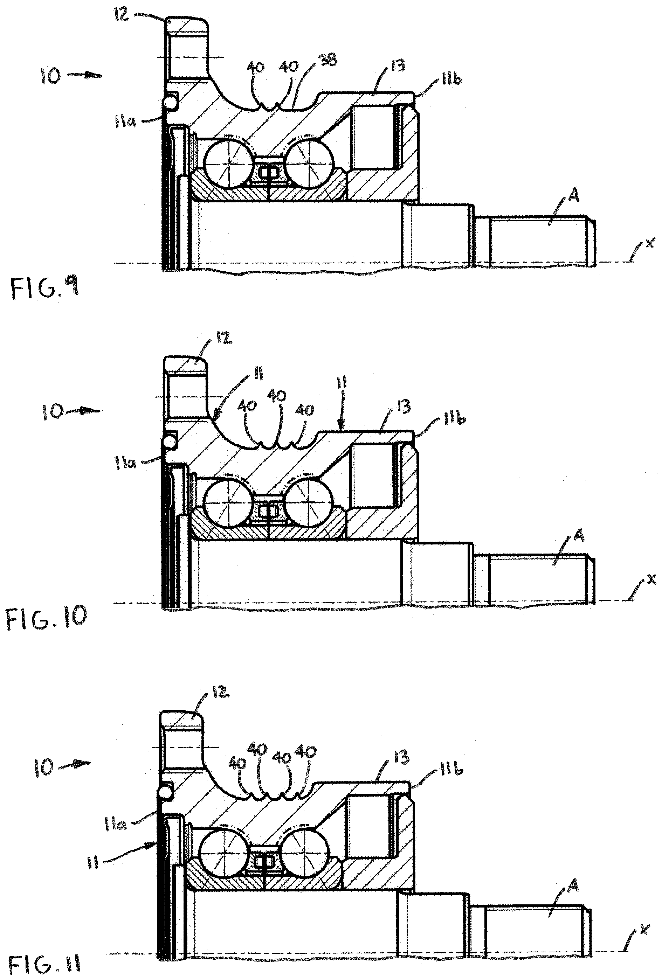

Most preferably, the outer race 11 includes a plurality or set of cutting projections 40 extending radially outwardly from the recess 40 and spaced axially apart, each projection 40 preferably being formed as an enclosed ring 42. Specifically, the outer race 11 may include two projections 40 (Fig. 9), three projections 40 (Fig. 10), four projections (Fig. 11), or even five or more projections 40 (not shown). As with the single projection 40, each projection 40 of a set or plurality of projections 40 may alternatively be formed as a plurality of arcuate segments 42 or the plurality of projections 40 may include a combination of enclosed rings 42 and arcuate segments 46 (alternatives not shown). Regardless of the specific number of cutting projections 40, the hub assembly of the present invention is provided with a means or mechanism to at least facilitate the removal of accumulated fibers or wires, and potentially even entirely prevent such fiber/wire accumulation, from the recess 38 of the outer race 11.

Representative, non-limiting examples of the present invention were described above in detail with reference to the attached drawings. This detailed description is merely intended to teach a person of skill in the art further details for practicing preferred aspects of the present teachings and is not intended to limit the scope of the invention.

Moreover, combinations of features and steps disclosed in the above detailed description may not be necessary to practice the invention in the broadest sense, and are instead taught merely to particularly describe representative examples of the invention. Furthermore, various features of the above-described representative examples, as well as the various independent and dependent claims below, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter. The invention is not restricted to the above-described embodiments, and may be varied within the scope of the following claims.

## Claims

1. A hub-bearing assembly for rotatably mounting a soil-working disc (D) on a supporting axle (A) of an agricultural machine, the assembly comprising:
a hub-bearing unit (10) with an outer race (11) rotatable about a central axis (x) and having an outer axial end (11a), an inner axial end (11b), a flange (12) extending radially outwardly from the outer axial end (11a) and configured to mount a cutting disc (D), a radially enlarged collar section (13) extending from the inner axial end (11b) and toward the outer axial end (11a) and having an cylindrical outer surface (13a), and a recess (38) defined between the flange (12) and the collar section (13), the recess (38) providing a seat for winding wires and/or fibers picked up from fields during use of the agricultural machine and being at least partially defined by a cylindrical outer surface (11c) of the outer race (11);
**characterized in that** a barrier surface (34) extends axially and radially between the cylindrical outer surface (11c) of the outer race (11) and the cylindrical outer surface (13a) of the collar section (13) and partially defines the recess (38), at least a radially outermost section (34a) of the barrier surface (34) defining an angle (θ) with respect to the central axis (x), the angle (θ) having a value of at least fifty-five degrees (55°).

2. The assembly of claim 1, **characterized in that** the angle (θ) has a value of at least seventy degrees (70°).

3. The assembly of claim 1 or 2, **characterized in that** the barrier surface (34) further has a curved radially innermost section (34b) extending between the cylindrical outer surface (11c) of the outer race (11) and the radially outermost section (34a) of the barrier surface (34).

4. The assembly of any one of claims 1-3, **characterized in that** the outer race (11) further has at least one cutting projection (40) extending radially outwardly from the recess (38) and configured to at least facilitate shearing of wires and/or fibers wound about the recess (38).

5. The assembly of claim 4, **characterized in that**:
the recess (38) is partially defined by an outer circumferential surface (11c) of the outer race (11); and
at least one cutting projection (40) has a radially-inner base (40a) at the outer circumferential surface (11c) of the recess (38) and having a first axial thickness (t1), and a radially-outer edge (40b) having a second axial thickness (t2), the first axial thickness (t1) being greater than the second axial thickness (t2).

6. The assembly of claim 4 or 5, **characterized in that** the at least one cutting projection (40) includes a plurality of cutting projections (40) spaced axially apart.

7. The assembly of claims 4-6, **characterized in that**:
the at least one cutting projection (40) is formed as an enclosed ring (42) extending circumferentially and entirely about a central axis (x); or
that the at least one cutting projection (40) includes a plurality of arcuate segments (42) spaced circumferentially apart about a central axis (x).

8. The assembly of claim 4 or 5, wherein the at least one cutting projection (40) is formed as a helix (4) extending circumferentially at least one revolution about a central axis (x).

9. The assembly of any one of the preceding claims, further comprising a sealing device (20) mounted between the radially enlarged section (13) of the outer race (11) and the axle (A) and located adjacent to the inner axial end (11b) of the outer race (11).

10. The assembly of claim 9, **characterized in that** the sealing device (20) comprises a rotatable part, secured to the outer race (11), and a stationary part, each of said parts having a shield (21, 28) carrying a respective gasket of elastic material (25, 32) with at least one respective sealing lip (26, 27; 33), wherein the two gaskets are concentric and substantially coplanar.
